# EUROPEAN PATENT APPLICATION

(11) **EP 1 043 355 A1**
(43) Date of publication of application: **11.10.2000**
(21) Application number: 00107117.4
(22) Date of filing: 07.04.2000
(51) Int. Cl.: C08K 3/00, B29D 7/01, B32B 27/20, C08K 5/00

(54) **Thermoplastic acrylic sheet compositions and their use as substitutes for high pressure decorative laminate**

(30) Priority: 08.04.1999 US 288320
(71) Applicant: Premark RWP Holdings, Inc., Wilmington, Delaware 19801 (US)
(72) Inventor: Ingrim, Michael E., Belton, Texas 76513 (US); Krejchi, Mark Thomas, Temple, Texas 76502 (US); Mafoti, Robson, Temple, Texas 76501 (US); Rabroker, Beth A., Lott, Texas 76656 (US); Lee, Yein Ming, Temple, Texas 76502 (US)
(74) Representative: Frohwitter, Bernhard, Dipl.-Ing.

(57) **Abstract**

A method for manufacturing a solid surface laminate is disclosed. The method is accomplished by feeding a thermoplastic acrylic polymer into an extrusion line, feeding an opaque layer material into the extrusion line and co-extruding a thermoplastic acrylic layer and an opaque layer to form the solid surface laminate.

## Description

This application is a continuation-in-pan of U.S. Patent Application Serial No. 08/899,118, filed July 23, 1997, entitled "Thermoplastic Acrylic Sheet Compositions and Their Use as Substitutes For High Pressure Decorative Laminate", which is currently pending.

The present invention is directed to a translucent or opaque thermoplastic acrylic sheet exhibiting good scratch resistance, hardness and toughness, and capable of being machined. The thermoplastic acrylic sheet of the present invention is suitable for lamination of structural plastics and articles produced thereof. The preferred use for the composition of the present application is as a substitute for conventional high-pressure decorative laminate, for example in production of counter-tops, vanity tops, bath and shower surfaces, and furniture surfacing.

The use of structural plastics, such as acrylonitrile-butadiene-styrene (ABS) resin, poly(vinyl chloride) (PVC) resin, polycarbonate as counter-tops, bathtubs, and shower stalls is known. However, although these structural plastics are strong and tough, the properties of their exposed surfaces are degraded by light, they can be easily scratched without being able to be repaired, they are adversely affected by solvents and water, they require substantial thickness and some of them are expensive.

To overcome the above deficiencies crosslinked compositions have been used in the past. Thus, U.S. Patent No. 4,085,246 refers to a castable composition for making a simulated granite. The composition of the above '246 patent comprises a polymer or a mixture of polymers dissolved in a polymerizable constituent. This composition is then cast or poured into a mold and cured giving a flat or shaped article with a reproducible simulated granite pattern. However, this composition attains its properties by thermosetting.

Further, U.S. Patent 5,318,737 refers to a method for preparing a plastic composite by feed stock coextrusion of a molten acrylic based capstock overlying and integrally bonded to an underlying structural plastic ply. The composition of the capstock of the '737 patent contains an acrylic polymer having a molecular weight of at least about 125,000 daltons in an amount of about 40 to about 88 wt.%, and an acrylate-based impact modifier resin in an amount of about 12 to about 60 wt.% in the form of discreet multi-layered polymeric particles. However, this composition does not exhibit the required hardness for counter-top uses.

In addition, U.S. Patent No. 4,533,680 refers to a thermoplastic resin composition comprising a crystalline thermoplastic resin, a reinforcing fiber, a flaky filler and polycarbonate. The composition of the above '680 patent is suitable for molding. However, crystalline thermoplastic resins, such as polyacetal, polybutylene terephthalate, polypropylene terephthalate, polyethylene terephthalate and polyamide, described in the reference, are not suitable as surfacing materials because of incompatibility with structural materials forming a cap layer, sensitivity to water or dimensional stability, as well as insufficient hardness.

U.S. Patent 4,938,825 discloses laminated bath tub or shower frays formed from a preformed shell of cell-cast, continuous-cast or extruded acrylic with a second layer of reinforced rapid injection molded (RRIM) polyurethane foam.

U.S. Patent 4,458,039 discloses the addition of wollastonite fibers of preferably high aspect ratio to thermotropic liquid crystalline polymer blends in order to reduce surface abrasion of articles produced from the polymer blend.

However, none of these references suggest the preparation of a thermoplastic acrylic sheet composition that can be used in the place of conventional high pressure decorative laminate that combines the ease of handling and machinability of high pressure decorative laminate with the scratch resistance, toughness, resistance to cracking and renewability of conventional solid surfacing materials.

Thus, there is a need for a thermoplastic acrylic sheet composition, preferably for use as a replacement for conventional high pressure decorative laminate, and preferably formed by extrusion or coextrusion of a thermoplastic acrylic composition, and which, at relatively low thickness exhibits scratch resistance, toughness, resistance to cracking during handling, renewability and machinability.

Accordingly, one object of the present invention is to provide a substitute for high-pressure decorative laminate that can be processed and handled like conventional high-pressure decorative laminates, but has the properties and advantages of much thicker solid surfacing and veneer materials.

A further object of the present invention is to provide a thin thermoplastic acrylic sheet that has the properties of translucency, high hardness, handleability and is thinner than conventional solid surfacing and veneer materials, but retains the look, feel and durability of such conventional solid surfacing and veneer materials.

It is a further object of the present invention to provide an extruded thermoplastic acrylic sheet composition exhibiting good scratch resistance, hardness, renewability, machinability, for use as a base material for counter tops, vanity tops, bath and shower surrounds and furniture surfaces.

It is a further object of the present invention to provide a low thickness extruded thermoplastic acrylic sheet for a counter top base material exhibiting good scratch resistance, hardness, renewability, and machinability. The term "machinability" is used to denote the ability of the thermoplastic acrylic sheet to be machined with conventional high pressure decorative laminate equipment. The term "renewability" is used to denote the ability to remove scratches and other marks on the surface of the thermoplastic acrylic sheet by sanding, preferably wet-sanding, or other abrasive means to result in a surface that contains no readily visible marks.

These and other objects of the present invention have been satisfied by the discovery of a thermoplastic acrylic sheet, comprising:
a thermoplastic acrylic polymer having dispersed therein:
a filler in an amount sufficient to provide the sheet with a Barcol hardness of at least 40; and
an impact modifier;
   wherein said thermoplastic acrylic polymer has a melt flow index of at least 1.5; and wherein said filler has an aspect ratio of up to 25:1; and its use, either alone or in combination as a laminate with an opaque layer, to give a product having the properties of translucency, high hardness, handleability and is thinner than conventional solid surfacing and veneer materials, but retains the look, feel and durability of such conventional solid surfacing and veneer materials.

In the surfacing material market, there are a number of products that provide a perception of depth, a simulated marble or granite appearance and provide renewability of the material's surface. These include 1/2" thick products known as solid surfacing materials, as well as 1/8" thick veneer products. The present invention was prompted by a need for a product that could provide the look and properties of a solid surfacing material or veneer, but at the thickness of a conventional wood or paper based high pressure decorative laminate, with the ability to be machined and processed on conventional high pressure decorative laminate equipment.

The most logical method for making a thinner product with these simulated granite or marble surfacing materials is by abrasion or sanding of the surface. For example, one could simply sand the solid surfacing veneer material from its 125 mil thickness to a thickness of from 30 to 70 mil. However, it has been found that by doing so, the resulting material has poor physical and handling characteristics in tat it cracks too readily upon moving and has insufficient heat resistance.

Accordingly, the present invention provides an acrylic sheet material suitable for use in producing surfacing material but with a thickness comparable to conventional wood or paper high pressure decorative laminates.

The thermoplastic acrylic sheet composition of the present invention is suitable for use alone or in combination with an opaque second layer as described below. When an opaque second layer is present the opaque layer can be separately prepared or can be prepared by coextrusion with the thermoplastic acrylic sheet composition. When the thermoplastic acrylic sheet composition of the present invention is used as a surfacing material for conventional high-pressure decorative laminate end-uses, it is preferred that the acrylic sheet be translucent in order to provide the resulting product with an appearance of depth to the surface, similar to the appearance obtained with conventional 1/8" veneer or 1/2" solid surfacing materials. Further, when the thermoplastic acrylic sheet composition is used in combination with an opaque second layer as described below, the resulting laminate can be used in place of conventional high-pressure decorative laminate and has superior handling properties as compared to the extruded thermoplastic acrylic sheet composition alone. The opaque second layer provides further improved handling of the laminate product, such as bending strength and flexibility.

The product of the present invention preferably provides scratch resistance, stain resistance, heat resistance and impact performance similar to or better than conventional SSV, solid surfacing materials and high-pressure laminate. Also preferred in the present product is the appearance of a solid surfacing product and the ability to be post-formed without noticeable edge whitening. Additionally, it is preferred that the laminate product be able to survive conventional laminate fabricating, postforming and bonding processes without surface damage or breakage significantly in excess of conventional laminate levels.

The product of the present invention can be used as a substitute for conventional high-pressure laminate, in any of its conventional uses. These include, but are not limited to, counter tops, vanity tops, bath and shower surrounds, furniture surfacing, wall surfacing, etc. For example, in the area of furniture surfacing, the present materials can be used to provide surfacing on tables, desks, chairs, file cabinets, etc.

The present product provides for the first time the ability to give all the advantages of solid surfacing technology at a fraction of the cost of solid surfacing materials, with all of the handling advantages of conventional high-pressure decorative laminate. Each of the components of the present product will now be described in greater detail below.

The present invention provides a thermoplastic acrylic sheet composition comprising a thermoplastic acrylic polymer having dispersed therein a filler and an impact modifier, and optionally a pigment and/or one or more conventional additives, wherein the filler has an aspect ratio of up to 25:1 and preferably a Mohs hardness value of at least 2.5.

In the present thermoplastic acrylic sheet composition, the filler is present in an amount sufficient to provide a Barcol hardness of the sheet of 40 or greater, preferably 50 or greater, more preferably 55 or greater.

The thickness of the thermoplastic acrylic sheet of the present invention is not particularly limited. The thickness of the thermoplastic acrylic sheet is preferably from 10 to 70 mil, more preferably from 25 to 60 mil, most preferably 30 mil. If the final product is desired to possess the appearance of conventional solid surfacing materials, the thermoplastic acrylic sheet should have a thickness of 30 mil or greater, in order to provide the necessary depth of visual field in the layer.

The thermoplastic acrylic sheet of the present invention can be formed by any method that provides the requisite thickness. Preferably, the present thermoplastic acrylic sheet is formed by casting or extrusion, most preferably by extrusion. When the thermoplastic acrylic sheet is formed by extrusion, a filler, an impact modifier, and optionally a pigment and/or one or more conventional additives, are dispersed into the thermoplastic acrylic polymer preferably using a melt blender conventional mixer or by extrusion, using a twin or single screw extruder and, subsequently, pelletized to form a masterbatch containing the thermoplastic acrylic polymer having dispersed therein the additional ingredients. The masterbatch is then extruded in a single or twin screw extruder equipped with a sheet forming die to form the thermoplastic acrylic sheet of the present invention.

The thermoplastic acrylic polymer is comprised by at least 90 wt.%, preferably at least 98 wt.%, most preferably 100 wt %, based on the total thermoplastic acrylic polymer of a homo or copolymer of methyl methacrylate. Suitable copolymerizable monoethylenically unsaturated monomers may be represented by the general formula (I):

CH₂=C(R¹)COOR² (I)

where R¹ is a hydrogen or a C₁-C₃ alkyl group, and R² is a C₁-C₂₀ alkyl group, phenyl, benzyl, hydroxy-(C₁-C₄)-alkyl, alkoxy-(C₁-C₄) alkyl, cyclopentyl, cyclohexyl, and combinations of these monomers thereof. Combinations of monomers where R¹ is hydrogen and monomers where R² is an alkyl group are used to modify the glass transition temperature (Tg) of the polymer. Preferred examples of comonomers are, but not limited to, methyl(meth)acrylate, ethyl(meth)acrylate, propyl (meth)acrylate, isopropyl (meth)acrylate, butyl (meth)acrylate, isobutyl (meth)acrylate, hexyl (meth)acrylate, isooctyl (meth)acrylate, isodecil (meth)acrylate, laurel (meth)acrylate, stearyl (meth)acrylate, phenoxyethyl (meth)acrylate, methoxyethyl (meth)acrylate, benzyl (meth)acrylate, epoxyethyl (meth)acrylate, 2-ethylhexyl (meth)acrylate, cyclopentyl (meth)acrylate and isobornyl (meth)acrylate, as well as combinations of those monomers thereof The term "alkyl" is used to denote straight chain or branched alkyl groups. A combination of these monomers may be used in order to achieve an appropriate Tg or other properties for the thermoplastic acrylic polymer. The term "(meth)acrylate" is used to denote an acrylate or a methacrylate monomer.

Additional suitable copolymerizable monoethylenically unsaturated monomers include styrenic monomer. Styrenic monomer denotes styrene, or a substituted styrene such as C₁-C₆ alkyl ring-substituted styrene, C₁-C₃ alkyl α-substituted styrene or a combination of ring and α-alkyl substituted styrene. Preferred styrenic copolymerizable monomers include styrene, p-methylstyrene, o-methylstyrene, p-butylstyrene, α-methylstyrene and combinations thereof.

A preferred molecular weight for the acrylic thermoplastic polymer is in the range of 100,000 to 220,000, preferably 120,000, to 180,000, and most preferably 130,000 to a 150,000 number average molecular weight (Mn). In the present invention it is more advantageous to describe the acrylic polymer with respect to its melt flow index (MFI), since the MFI of a polymer takes into consideration not only its molecular weight but also its polymer chain structure with respect to linearity, branching, crosslinking, etc. The acrylic polymer of the present invention has a MFI of at least 1.5, preferably from 1.5 to 30, more preferably from from 1.5 to 3.8, still more preferably from 3.0 to 3.5, most preferably round 3.4.

It is preferred that the thermoplastic acrylic polymer has a Tg between 90 and 130°C, more preferably between 95 and 110°C.

The thermoplastic acrylic polymer is preferably selected from poly(meth)acrylates sold under the tradename ACRYLITE by Cyro.

The filler of the present invention is required to have an aspect ratio greater than 1 and up to 25:1. The filler provides a range of properties to the resulting acrylic sheet, including, but not limited to, light scattering effects, color effects and physical property improvements, particularly in the area of hardness of the sheet. When a filler is used that has round particles (i.e. an aspect ratio of about 1), the resulting light scattering off of the particles in the sheet interferes with the desired translucency in the preferred embodiments of the present invention. However, in those embodiments where translucency is not desired, a filler having an aspect ratio of close to 1 could be used.

The filler is used in an amount sufficient to provide the acrylic sheet with the requisite Barcol hardness. Preferably, the filler is present in an amount of 20 to 60 wt.% based on the total composition, more preferably in an amount of about 35 to about 55 wt.%, most preferably in an amount of from 40 to 50 wt%. When the filler is present below 20 wt%, the resulting acrylic sheet has insufficient hardness and insufficient machinability. When the filler is present above about 60 wt%, the resulting acrylic sheet tends to become brittle and friable.

In a preferred embodiment, it is important that the filler have an aspect ratio significantly different from 1 and up to 25:1, preferably from 3:1 to 20:1, more preferably from 4:1 to 10:1.

In one preferred embodiment, a 1:1 mixture of two fillers, one of low aspect ratio of about 5:1 and one of high aspect ratio of about 20:1, are used. During the extrusion process, this mixture of aspect ratios results in a final extruded product with a filler having an average aspect ratio of about 5:1.

The filler of the present invention preferably has a Mohs hardness of at least 2.5, more preferably from 2.5 to 7, still more preferably from 4 to 5, most preferably about 4.5.

Suitable fillers include, but are not limited to, wollastonite, mica, CaCO₃, and silica, with wollastonite being most preferred from a standpoint of aspect ratios available and range of colors available from different sources. The use of different colors of filler in the present composition can be employed to provide color matching between the polymer and filler, between the filler and one or more pigments and between different batches of acrylic sheet. Wollastonite is also preferred because its refractive index is close to that of the acrylic polymers, thus providing good optical properties and effects in the final product.

Preferred wollastonites include Woll 266 (from American Minerals), KCL-12F (from Nyco), KCL-15F (from Nyco) and NYAD 325 (from Nyco). Depending on the properties desired in the final sheet prepared, the wollastonites noted above can be used singly or in combinations, with or without surface treatment, such as silane surface treatment, with the differences in aspect ratios of the products causing various changes in the physical properties of the resulting sheets. For example, the use of 20-25% of Woll 266 shows a significant increase in ultimate tensile stress, ultimate tensile strain, tensile toughness, ultimate flexural stress, ultimate flexural strain and flexural toughness of the prepared sheet compared to the use of 40% NYAD 325.

Preferred modifiers are those having a core-shell particle structure, where the core is comprised of a rubbery polymeric material having a glass transition temperature (Tg) of below -10°C and a thermoplastic second phase having a Tg of at least 50°C, the thermoplastic second phase being distributed and attached to the surface of the rubbery core. These types of modifiers are conventionally used in polyvinyl chloride (PVC) polymer compositions. Preferred materials for the core of the impact modifier particles in accordance with the present invention comprise a homopolymer or copolymer of butyl acrylate, ethyl acrylate, ethylhexyl acrylate, butadiene or dimethyl siloxane, and mixtures thereof. Preferred material for the thermoplastic shell comprises substantially poly(methyl methacrylate). Most preferred impact modifiers are those core-shell modifiers having a poly(dimethyl siloxane) core and a poly(methyl methacrylate) shell.

Conventionally, the use of impact modifiers in acrylic polymers is known to provide impact resistance as measured by energy to break, load to break and impact velocity at failure. Toughness is reflective of the overall mechanical performance of the polymer composition up to catastrophic failure and correllates to impact failure. The toughness is determined by the measurement of the integrated area under the stress/strain curve for the particular polymer composition. However, when conventional impact modifiers are used in acrylic polymers, the typical result is that while the impact resistance is improved, one sees a dramatic downshift in the deflection temperature under load (DTUL). However, the present invention provides for the first time the use of the above noted core-shell type impact modifiers in an acrylic polymer. The resulting acrylic polymer has improved impact resistance, but there is little or no change in the DTUL, even at high loadings of the impact modifiers.

Within the context of the present invention, the term "core-shell" is used to denote not only particles where the core is completely surrounded by a shell, but also to "structured multiphase composite" impact modifiers. The term "structured multi phase composite" is used to denote rubbery multi phase particles characterized in that they are comprised of a rubbery core having a lower glass transition temperature (Tg) and a thermoplastic second phase having a higher Tg, the thermoplastic second phase being distributed and attached to the surface of the rubbery core in the form of a discontinuous region of material. Structure multi phase composite are known having a discontinuous region (shell) in the form "spots", "patches", "multi-lobe", "peanut"-like, "acorn"-like, "raspberry"-like or any other form. Core-shell materials having the above structures have been disclosed in many publications over the past ten years, for example, in U.S. Patents 5,270,397, 5,306,777, 4,513,118 and 5, 447,989 and references therein. These references are incorporated herein by reference. The shell of the impact modifier particle provides compatibility of the impact modifier particles with the thermoplastic acrylic polymer while the core provides impact strength.

The impact modifier is present in the present acrylic sheet composition in an amount sufficient to maximize the impact resistance and toughness of the sheet, while minimizing the effect on the Barcol hardness. Increasing the impact modifier concentration results in (i), a decrease in the Barcol hardness, tensile modulus and stress at failure and, (ii), an increase in the strain at failure and toughness, when compared to the unmodified base layer. It is preferred that the impact modifier is present in an amount of from about 0.1 to 10 wt.% based on the amount of the thermoplastic acrylic polymer, preferably in an amount from about 1 to about 6 wt.%, most preferably in an amount of from about 2 to about 3 wt.%. When the impact modifier is present in an amount less than about 0.1 wt%, the resulting sheet has insufficient toughness and impact resistance, even though the Barcol hardness is barely affected. When the impact modifier is present in amounts of greater than about 10 wt% of the composition, the acrylic sheet loses Barcol hardness, with little significant additional improvement in toughness.

In combination with the loading amount, another important factor in selecting the impact modifier is the particle size. It is preferred that the particle size of the impact modifier particles are in the range of from 0.1 to 1 micron, preferably in the range between 0.2 and 0.6 microns.

Suitable, commercially available core-shell impact modifiers include, but are not limited to, FM10 and FM20 available from Kaneka Texas Corporation; DURASTRENGTH 200 and METABLEND S-2001 available from Elf Atochem; KM334 available from Robin and Haas and BLENDEX 980 available from General Electric.

Additional suitable impact modifiers include thermoplastic elastomers (TPE) including thermoplastic urethane elastomers (TPU), such as DESMOPAN available from Bayer; styrene-butadiene TPE such as available from Shell under the trade name KRATON; styrene polyolefin TPE such as available from Shell under the trade name KRATON G or ELEXAR. TPE impact modifiers may be used alone or in combination; combinations of TPE impact modifiers with core-shell modifiers are also possible.

Either organic or inorganic pigments or both can be used in the present invention. Suitable pigments include, but are not limited to, inorganic pigments such as TiO₂, basic carbonate white lead, basic sulfate white lead, basic silicate white lead, dibasic lead phosphite, leaded zinc oxide, antimony oxide, or zinc sulfide, and organic pigments such as benzimidazolones, phthalocyanines, quinacridones, dioxazines, isoindolinones, disazos, pyrazalones, diarylides and dianisidines, with the inorganic pigments being preferred and TiO₂ being most preferred.

The thermoplastic acrylic sheet of the present invention can be either translucent or opaque. When the acrylic sheet is translucent it is preferably either combined with a suitable opaque cap layer as described below or is used in combination with an opaque adhesive in order to bond the acrylic sheet to the surface to be covered. If the opaque adhesive or opaque cap layer are not used, it is important to be careful to avoid uneven coloring of the surface to be covered due to exposure of the surface through the translucent acrylic sheet. When used alone the acrylic sheet can also be opaque. In that embodiment, the pigment is present in an amount sufficient to block >90% of light transmission through the acrylic sheet, thus rendering the sheet effectively opaque.

It is most preferred that the acrylic sheet be translucent. The translucency and opacity can be determined readily by those of skill in the art in accordance with the procedures set forth in U.S. Patent 4,085,246 for measurement of optical density, the relevant portions of which are hereby incorporated by reference.

Additional additives include, but are not limited to, a fire retardant agent such as a fire retardant polymer (e.g. polyvinyl chloride, polyvinylidene chloride), a fire retardant monomer (e.g. bis-(b-chloroethyl) vinylphosphate) and an inorganic chemical such as zinc phosphate; a processing aid; a stabilizer; an antioxidant; an antimicrobial; a release agent; a dye; and a particulate material for decorative effect.

Suitable such additives are commercially available; they include, but are not limited to, fire retardants under the trade names ANTIBLAZE, available from Albright Wilson; FR fire retardants available from Amerbrom; Antimony Trioxide under the trade names AZ 12, AZ 14, AZ 15 and TruTint, available from Anzon America; SAYTEX flame retardants available from Ethyl Corporation; PYRO-CHEK flame retardants, available from Ferro; SAN-70/30, EVA-80/20, THERMOGUARD 212, THERMOGUARD 213, THERMOGUARD 215, THERMOGUARD 240, available from M&T Chemicals, FYREBLOC ANTIMONY OXIDE H, FYREBLOC ANTIMONY OXIDE L, FYREBLOC ANTIMONY OXIDE MH, FYREBLOC S GRADES, available from McGean-Rohco ; colloidal antimony oxide flame retardants under the trade names A1510LP, A1530, A1550, AP50, APE1545, APVC45, A1582, A-1540N, N24, ADP480, ADP494, available from Nyacol Products.

Suitable particulate materials include, but are not limited to, those commercially available; including but not limited to translucent and transparent particles which are natural or synthetic minerals or materials such as agate, alabaster, albite, calcite, chalcedone, chert, feldspar, flint quartz, glass, malachite, marble, mica, obsidian, opal, rock gypsum, sand, silica, travertine, and moderately filled or unfilled, pigmented or dyed, insoluble or crosslinked chips of polymers, such as ABS resins cellulose esters, cellulose ethers, epoxy resins, polyethylene, melamine resins, phenolic resins, polyacetals, polyacrylics, polydienes, polyesters, polystyrenes, urea/formaldehyde resins, polyureas, polyurethanes, polyvinyl chloride and the like.

Suitable processing aids include, but are not limited to, those under the trade names LUBRICIN, PARACIN CALCIUM RICINOLEATE, available from Caschem; METABLEN P series, available from M&T Chemicals; ACRYLOID K series, such as K-120N, K-120N-D, K-125, K-147, K-147, K-175, KM-318F, KM-323B, KM-330, KM-334, KM-608A, KM-611, KM-641, KM-653, KF-710, as well as those under the trade name PARALOID BTA series, available from Robin and Haas.

Suitable stabilizers include, but are not limited to, ultraviolet (UV) stabilizers such as those commercially available, hindered amine or benzophenone classes, under the trade name CYASORB UV series, available from American Cyanamid; heat stabilizers under the trade name CYASTAB series, lead carbonate, lead phosphate or lead phthalate salts, available from American Cyanamid; those under the trade name MARK VINYL STABILIZERS series available from Argus Chemical.

Suitable antimicrobials (bactericides/fungicides) include, but are not limited to, MICRO-CHEK antimicrobial agents, available from Ferro; INTERCIDE antimicrobial agents, available from Interstab Chemical; THOR PMDDS, PMA 100 or THORCAT PMA6/DPG antimicrobial agents from Thor Chemicals; and VANCIDE bactericide/fungicides from R. T. Vanderbilt.

Suitable antioxidants include, but are not limited to, those under the trade name CYANOX series available from Amarican Cyanamid; HOSTANOX series available from American Hoechst; ULTRANOX series available from Borg-Warner; IRGANOX series available from Ciba-Geigy; all of which are hindered phenols.

Suitable release agents include include, but are not limited to, those under the trade name MOLD WIZ series available from Axel Plastics; CENTROPHIL, available from Central Soya; MOLGARD, PLASTILEASE, BULK SILICONE, available from RAM; the above are inorganic wax or silicone compositions.

Suitable dyes include, but are not limited to, azo dyes, diazo dyes, pyrazolone dyes, quinoline dyes, quinophthalone dyes, anthraquinone dyes and nigrosine dyes.

The thermoplastic acrylic sheet of the present invention may also contain, if desired, filled crystalline thermoplastic resin chips such as those described in U.S. Patent 5,457,152, the relevant portions of which are hereby incorporated by reference.

In a preferred embodiment there is provided a laminate comprising a translucent layer and an opaque layer. The translucent layer of this embodiment is comprised of the above described thermoplastic acrylic sheet composition. While the relative thickness of these two layers can be varied such that the translucent layer is thicker than the opaque layer, the layers are the same thickness, or the opaque layer is thicker than the translucent layer. It is preferred from an economic standpoint that the opaque layer be thinner than the translucent layer, since in the most preferred embodiment, the opaque layer is bonded to the surface of a substrate and is not visible during use. In this preferred embodiment, the translucent layer is termed the "base layer" while the opaque layer is termed the "cap layer", following conventional co-extrusion terminology. However, the use of these terms in the description of the present invention should not be construed to connote a particular method for making the present laminate, nor should this terminology be construed to connote relative thicknesses to the respective layers. The remaining description will describe the opaque layer as the "cap layer" and the translucent layer as the "base layer". The cap layer comprises a thermoplastic resin having dispersed therein a filler in an amount of from 5 to 25 wt.% based on the total composition of the cap layer, a pigment in an amount sufficient to render the cap layer opaque as determined by optical density noted above, a glass fiber and optionally one or more conventional additives.

The base layer and cap layer can be joined by a variety of methods, such as by heating the layers in contact with one another under pressure, by use of an appropriate adhesive or by coextrusion of the base and cap. When the coextrusion method is used the base and cap should be compatible or miscible with one another so that a strong interfacial adhesion between the two layers is provided without additional use of an adhesive tie layer. The term "compatible" is used to denote good interfacial adhesion between the constituent polymers, while the term "miscibility" is used to denote single-phase behavior. These terms are well known to those skilled in the art and are the subject of the treatise: "Polymer-Polymer Miscibility", by Olabisi et al, Academic Press, NY, 1979.

Preferably, the laminate is formed by a stratified multi phase flow commonly referred to in the polymer processing industry as coextrusion. In accordance with the present invention a conventional flat-sheet forming die is provided in which the different layers are assembled. Accordingly, the base layer comprises a coextruded thermoplastic acrylic polymer having dispersed therein a mineral filler and an impact modifier, and optionally a pigment and/or one or more conventional additives; the cap layer comprises a coextruded thermoplastic resin having dispersed therein a filler, a pigment and glass fibers.

In the present invention the laminate is preferably formed by a co-extrusion process. Thus, the ingredients for the base layer and the cap layer are compounded in an extruder as described above for the extruded thermoplastic acrylic sheet to form a pelletized masterbatch for the base layer and one for the cap layer. The compositions for the two layers are subsequently extruded through separate extruders, where the temperature of each extruder is adjusted to attain similar melt flow viscosities. The laminate is preferably produced using a standard flow divider and sheet die.

A preferred thickness of the laminate in accordance with the present invention is between 10 and 70 mil, more preferably between 25 and 60 mil.

In the laminate of the present invention, it is important to be careful with the selection of the base layer and the cap layer, especially with respect to their thermal coefficients of expansion. Preferably, the layers should have thermal coefficients of expansion that differ from one another by no more than 25%, more preferably by no more than 10%, in order to avoid differential expansion of the layers under thermal stress. Such differential expansion could cause curling and twisting of the laminate product due to internal stresses generated therein.

The base layer of the laminate of the present invention comprises the above described thermoplastic acrylic polymer sheet.

The cap layer is comprised of a thermoplastic resin having dispersed therein a filler, a pigment and glass fibers.

The thermoplastic resin, in accordance with the present invention is preferably compatible or miscible with the acrylic thermoplastic polymer of the base layer. Suitable such thermoplastic resins include, but are not limited to, thermoplastic acrylic polymer, acrylonitrile-butadiene-styrene copolymer (ABS), poly(vinyl chloride) (PVC), acrylonitrile-styrene-acrylate (ASA), styrene-acrylonitrile (SAN) and polycarbonate (PC). Examples of suitable thermoplastic resins, commercially available include, but are not limited to, ACRYLITE polymers (from Cyro) and CYCOLAC polymers (from GE). Further, the thermoplastic acrylic polymer of the cap layer may be the same or different than the thermoplastic acrylic polymer of the base layer as long as the miscibility or compatibility requirement is met.

The preferred fillers for the cap layer in accordance with the present invention are selected from those discussed above for the base layer. The filler is present in the cap layer in an amount of up to 25 wt%, based on the total composition of the cap layer. However, it is not necessary to employ the same filler in the base and the cap layers. In the cap layer, wollastonite is also the preferred filler. The use of wollastonite provides a stiffer cap layer. Optionally, the cap layer can be used without the presence of a filler, although the filler is preferred in an amount of from 5 to 25 wt%.

Preferred pigments are those described for the base layer. However, the preferred amount of pigment for the cap layer is an amount sufficient to impart opacity to the cap layer. The term "opacity" was described above. For example, when TiO₂ is used as the pigment, a pigment level of 5% is sufficient to render the cap layer opaque. The actual pigment level however can vary depending on the pigment chosen and is readily determined by one of ordinary skill in the art.

Any glass fibers may be employed in accordance with the present invention. Preferred glass fibers include milled, silane treated or otherwise sized glass fibers having a length of up to 1/8", preferably of a length of up to 1/16". Suitable glass fibers can be obtained using any type of commercially available glass fiber, such as Type E, Type S and Type C glass fibers.

As in the above described thermoplastic acrylic sheet, the cap layer of the present invention can contain other conventional additives and processing aids, including but not limited to, a fire retardant agent such as a fire retardant polymer (e.g. polyvinyl chloride, polyvinylidene chloride), a fire retardant monomer (e.g. bis-(b-chloroethyl) vinylphosphate) and an inorganic chemical such as zinc phosphate; a processing aid; a stabilizer; an antioxidant; an antimicrobial; an impact modifier; a release agent; a dye; and a particulate material for decorative effect.

When the thermoplastic acrylic sheet or laminate of the present invention is being bonded to a substrate to be covered, it is preferred that the surface area of the sheet or laminate be increased by roughening in order to improve the adhesion between the sheet or laminate and the substrate. This roughening can be performed in a number of different ways, with sanding and embossing being preferred. When the roughening is performed by embossing, the sheet or laminate is preferably embossed at approximately the same time as it is being extruded, provided that there is sufficient lapse of time between the extrusion die and the embossing rolls to allow the sheet or laminate to cool sufficiently to retain the embossing pattern. However, it is also possible to emboss the sheet or laminate merely by reheating the product and passing it through an embossing roll at a temperature sufficient to impart and retain the embossing pattern. The determination of the appropriate parameters for embossing such sheets and laminates, either during the extrusion and cooling process or after the formation of the sheets and laminates, is well within the purview of those of ordinary skill in the art. Preferred substrates include wood based products, such as particle board, fiberboard or plywood; polymeric materials, such as thermosets or thermoplastics; and metals.

When binding the thermoplastic acrylic sheet or the laminate of the present invention to a substrate, any conventional adhesives can be used, so long as they are suitable for binding the polymer of the cap layer to the type of substrate chosen. A most preferred adhesive for bonding an acrylic cap layer to a particle board substrate is an ethylene-vinyl acetate (EVA) water based emulsions. For example, Lokweld 3000 (LW3000) adhesive made by Wilsonart International is an EVA based product suitable for this application. To achieve substrate failure type bond strength, the EVA emulsions should be modified with one or more water dispersible urethane additives such as Dispercoll U54 and Desmodur DA. These materials are produced by Bayer Corporation and are used at levels equivalent to 2%wt. and 0.1%wt.of LW3000. Adhesion can be further improved by the addition of some minor amounts of one or more high boiling, non-VOC solvents such as methyl propyl ketone at 5% by weight of that of LW3000. Other EVA water based emulsions, water dispersible urethane additives and solvents can be used, although they are not as effective as the above noted combination. The EVA water based emulsion, water dispersible urethane additive and high-boiling non-VOC solvent can be mixed in any order using conventional procedures. The adhesives can be sprayed onto the substrate or roll coated with a glue spreader. Strong bonds can be obtained by either pinch rolling or cold pressing the assembly.

Having generally described this invention a further understanding can be obtained by reference to certain specific examples which are provided herein for the purpose of illustration only and are not intended to be limiting unless otherwise specified.

A thermoplastic acrylic sheet in accordance with the present invention was prepared by extrusion using a Berstorff ZE25, fully intermeshing, co-rotating, twin screw extruder. The extruder had a L/D of 33. The die gap was set manually to produce sheets with a thickness of ca. 45 mil. Volumetric feeders were used to meter the acrylic pellets (Acrylite S10, from Cyro) and 5% impact modifier (Metablend S2001, from Elf Atochem) at the feed throat and starve feed 40 wt% of wollastonite (Nyad 325, from Nyco Industries) to the twin screw side stuffer. These feeders were calibrated manually prior to the trial. The melt was devolitilized in vacuo prior to the die. The take-off equipment was a simple three roll stack, with the roll temperatures maintained at approximately 110°C. The processing temperatures for all the heating zones were set at 250°C. Measurements indicated that the melt temperature was probably in the range of 260-270°C, at the upper limits of the recommended processing window for acrylic extrusion.

The resulting acrylic sheet had a Barcol hardness of 50 and a deflection temperature under load (DTUL) at 264 psi of 97°C. The tensile properties as measured in accordance with ASTM D638 showed a Stress at failure of 6000 psi, a Strain at failure of 1.4%, a modulus of 0.84 msi and a Toughness of 55 psi. The Impact Velocity at failure was 4.0 ft/sec, with a load to initial surface crack of 550 ft-lb and an Energy to initial surface crack of 1.3 ft-lb.

The data summarized in Table 1 provide a comparison of the physical and mechanical properties of the solid surfacing laminate of the present invention (SSL) and a conventional solid surfacing veneer (SSV).

The laminated base and cap layer structure (SSL) was produced via a co-extrusion process utilizing the sheet line available at GOEX, in Janesville, WI. The base layer was produced from compounded pellets composed of PMMA (Cyro Acrylite S10, 57%wt.), wollastonite (Nyco Nyad 325, 40% wt.) and Metablend S2001 (Elf Atochem, 3% wt.). The cap layer was produced from PMMA (Cyro Acrylite S10, 75% wt.), TiO₂ (5% wt.), milled fiber (Owens Corning, 5% wt.) and wollastonite (Nyco Nyad 325, 15% wt.). Single screw extruders were used to convert the precompounded pellets into the laminate sheet (SSL) via a feed block designed specifically for co-extrusion. As a result of the additional mixing steps involved in this process, direct comparisons between the mechanical performance of the thermoplastic acrylic sheet base layer of Example 1 and the laminate SSL sheets of Example 2 must be made with caution.

Sample 3 was prepared by sanding a conventional solid surfacing veneer (SSV) product down to a thickness of 60 mil, the same thickness as the SSL structure. Conventional SSV differs from the layers of the present laminate in tat the SSV is prepared by casting of cross-linked PMMA containing high loadings of alumina trihydrate as the filler. Sample 4 is the SSV product prior to sanding at its commercially available 0.125" (125 mil) thickness. The SSV product is commercially available and was made for Wilsonart by Aristech.

The dramatic increase in the tensile and flexural toughness observed in sample 3 compared to sample 4 indicates that sanding SSV to 0.045" increased the flexibility of the sheet and produced a more ductile material that was significantly softer (Barcol hardness of 53 vs. 59) than the commercially available SSV. The severe drop in impact resistance indicated by the decrease in ball impact (67 vs. >150) was, however, inconsistent with this conclusion. Preliminary Dynatup experiments indicated that the energy required for initial surface crack in sample 3 was 1.3 ft-lb at a load of 544 lb with a velocity of 5.5 ft/sec. These values were more in line with those observed for the SSL product of the present invention (1.6 ft-lb, 645 lb, 5.0 ft/sec) suggesting that the these two materials had similar impact properties.

The increase in tensile and flexural performance of SSL when compared to the solid surfacing base layer suggests that the presence of the cap layer enhanced the overall mechanical performance of the resulting sheet. Although the present inventors do not want to be bound by any theory on the mechanism of action, it is believed that the rationale for the observation may be a consequence of better mixing as well as a decrease in the overall weight fraction of filler in the laminated sheet. However, the combination of these factors produced a solid surfacing laminate sheet with superior physical and mechanical performance when compared to the sanded SSV (sample 3). This conclusion is based on the 2-fold increase in the tensile and flexural toughness observed in sample 2 and the increase in the tensile and flexural swain at failure. The improved handleability of SSL can be directly attributed to these qualities.

**TABLE 1**

| PHYSICAL AND MECHANICAL PERFORMANCE COMPARISON BETWEEN SOLID SURFACING LAMINATE (SSL) AND BACK-SIDE SANDED SOLID SURFACING VENEER (SSV) | | | |
|---|---|---|---|
| TEST | Sample 1: Solid Surfacing Laminate (SSL) | Sample 2: Solid Surfacing Veneer (SSV) | Sample 3: Solid Surfacing Veneer (SSV) |
| Sheet Characteristics | 50 mil solid base with 10 mil cap | SSV backside sanded to 45 mil | Commercial product @ 125 mil |
| Barcol Hardness | 54 | 53 | 55 |
| DTUL @ 264 psi (C) | 92 | 89 | 92 |

| Tensile (ASTM D638) | | | |
|---|---|---|---|
| Stress @ Yield (psi) | 6400 | 4000 | 4000 |
| Strain @ Yield (%) | 2.4 | 3.1 | 1.3 |
| Modulus (msi) | 0.9 | 1.2 | 1.15 |
| Toughness (psi) | 123 | 107 | 61 |

| Flexural (ASTM D790) | | | |
|---|---|---|---|
| Stress @ Failure (psi) | 10,650 | 9500 | 8600 |
| Strain @ Failure (%) | 2.2 | 2.6 | 1.6 |
| Modulus (msi) | 0.67 | 0.7 | 1.0 |
| Toughness (psi) | 12.79 | 18 | 11 |
| Ball Impact (inches) | 78 | 67 | 208 |

Obviously, additional modifications and variations of the present invention are possible in light of the above teachings. It is therefore to be understood that within the scope of the appended claims, the invention may be practiced otherwise than as specifically described herein.

## Claims

1. A method for manufacturing a solid surface laminate, comprising the following steps:
feeding a thermoplastic acrylic polymer into an extrusion line;
feeding an opaque layer material into the extrusion line; and
co-extruding a thermoplastic acrylic layer and an opaque layer to form the solid surface laminate.

2. The method according to claim 1, wherein the thermoplastic acrylic polymer has dispersed therein a filler in an amount sufficient to provide the thermoplastic acrylic layer with a Barcol hardness of at least 40 and an impact modifier, wherein the thermoplastic acrylic polymer has a melt flow index of at least 1.5 and the filler has an aspect ratio of up to 25:1.

3. The method according to claim 2, wherein the filler is wollastonite.

4. The method according to claim 1, 2 or 3, wherein the thermoplastic acrylic polymer has a melt flow index of from 1.5 to 30.

5. The method according to claim 1, 2 or 3, wherein the thermoplastic acrylic polymer has a melt flow index of from 1.5 to 3.8.

6. The method according to claim 2, wherein the filler has an aspect ratio of from 3:1 to 20:1.

7. The method according to any of claims 1 to 6, wherein the thermoplastic acrylic polymer comprises one or more additives selected from the group consisting of fire retardants, particulate materials, processing aids, stabilizers, antioxidants, antimicrobials and release agents.

8. The method according to any of claims 1 to 7, wherein said thermoplastic acrylic layer has a thickness of from approximately 0.254 mm (10 mil) to approximately 1.778 mm (70 mil).

9. The method according to any of claims 1 to 7, wherein the thickness of said thermoplastic acrylic layer is from approximately 0.635 mm (25 mil) to approximately 1.524 mm (60 mil).

10. The method according to any of claims 1 to 9, wherein said thermoplastic acrylic layer is translucent.

11. The method according to any of claims 1 to 9, wherein the thermoplastic acrylic polymer further comprises one or more pigments in an amount sufficient to render the thermoplastic acrylic layer opaque.

12. The method according to any of claims 1 to 11, wherein the opaque layer material comprises a thermoplastic resin having dispersed therein a filler in an amount of up to 25 wt.% based on total composition of the opaque layer and a glass fiber.

13. The method according to claim 12, wherein the thermoplastic resin is selected from the group consisting of a thermoplastic acrylic polymer, acrylonitrile-butadiene-styrene (ABS)resin, poly(vinyl chloride) (PVC) resin, acrylonitrile-styrene-acrylate (ASA)resin, styrene-acrylonitrile (SAN) resin and polycarbonate (PC).

14. The method according to claim 12 or 13, wherein the filler for the opaque layer is selected from the group consisting of wollastonite, mica, calcium carbonate and silica.

15. The method according to claim 12, 13 or 14, wherein the filler for the opaque layer has an aspect ratio of up to 25:1.

16. The method according to claim 1, further comprising one or more pigments in either or both of the thermoplastic acrylic layer and the opaque layer.

17. The method according to claim 16, wherein the one or more pigments are selected from the group consisting of TiO2, basic carbonate white lead, basic sulfate white lead, basic silicate white lead, dibasic lead phosphite, leaded zinc oxide, antimony oxide, and zinc sulfide.

18. A solid surface laminate formed by the method comprising the following steps:
feeding a thermoplastic acrylic polymer into an extrusion line;
feeding an opaque layer material into the extrusion line; and
co-extruding a thermoplastic acrylic layer and an opaque layer to form the solid surface laminate.

19. The solid surface laminate according to claim 18, wherein the plastic acrylic polymer has dispersed therein a filler in an amount sufficient to provide the thermoplastic acrylic layer with a Barcol hardness of at least 40 and an impact modifier, wherein the thermoplastic acrylic polymer has a melt flow index of at least 1.5 and the filler has an aspect ratio of up to 25:1.

20. The laminate according to claim 19, wherein the filler is wollastonite.

21. The laminate according to claim 18, 19 or 20, wherein the thermoplastic acrylic polymer has a melt flow index of from 1.5 to 30.

22. The laminate according to claim 18, 19 or 20, wherein the thermoplastic acrylic polymer has a melt flow index of from 1.5 to 3.8.

23. The laminate according to claim 19, wherein the filler has an aspect ratio of from 3:1 to 20:1.

24. The laminate according to any of claims 18 to 21, wherein the thermoplastic acrylic polymer further comprises one or more additives selected from the group consisting of fire retardants, particulate materials, processing aids, stabilizers, antioxidants, antimicrobials and release agents.

25. The laminate according to any of claims 18 to 24, wherein the thermoplastic acrylic layer has a thickness of from approximately 0.254 mm (10 mil) to approximately 1.778 mm (70 mil).

26. The laminate according to any of claim 18 to 25, wherein the thickness of said thermoplastic acrylic layer is from approximately 0.635 mm (25 mil) to approximately 1.524 (60 mil).

27. The laminate according to any of claims 18 to 26, wherein said thermoplastic acrylic layer is translucent.

28. The laminate according to any of claims 18 to 26, wherein the thermoplastic acrylic polymer includes one or more pigments in an amount sufficient to render the thermoplastic acrylic layer opaque.

29. The laminate according to any of claims 18 to 28, wherein the opaque layer material comprises a thermoplastic resin having dispersed therein a filler in an amount of up to 25 wt.% based on total composition of the opaque layer and a glass fiber.

30. The laminate according to claim 29, wherein the thermoplastic resin is selected from the group consisting of a thermoplastic acrylic polymer, acrylonitrile-butadiene-styrene (ABS)resin, poly(vinyl chloride) (PVC) resin, acrylonitrile-styrene-acrylate (ASA)resin, styrene-acrylonitrile (SAN) resin and polycarbonate (PC).

31. The laminate according to claim 29 or 30, wherein the filler for the opaque layer is selected from the group consisting of wollastonite, mica, calcium carbonate and silica.

32. The laminate according to claim 29, 30 or 31, wherein the filler for the opaque layer has an aspect ratio of up to 25:1.

33. The laminate according to claim 18, further comprising one or more pigments in either or both of the thermoplastic acrylic layer and the opaque layer.

34. The laminate according to claim 33, wherein the one or more pigments are selected from the group consisting of TiO2, basic carbonate white lead, basic sulfate white lead, basic silicate white lead, dibasic lead phosphite, leaded zinc oxide, antimony oxide, and zinc sulfide.

35. The laminate according to anyone of claims 18 to 34, further comprising a substrate, wherein the opaque layer of the laminate is bonded onto a surface of the substrate.

36. The laminate according to claim 35, wherein the substrate is a member selected from the group consisting of wood products, polymeric materials and metals.

37. The laminate according to claim 35, wherein the substrate is a member selected from the group consisting of furniture surfaces, vertical walls and surfaces, non-vertical bathroom surfaces and non-vertical kitchen surfaces.

38. The laminate according to claim 37, wherein the non-vertical bathroom surfaces and the non-vertical kitchen surfaces are selected from the group consisting of counter tops and vanity tops.
